# EUROPÄISCHE PATENTSCHRIFT

(11) **EP 0 454 951 B1**
(45) Veröffentlichungstag und Bekanntmachung des Hinweises auf die Patenterteilung: **20.07.1994**
(21) Anmeldenummer: 91101735.8
(22) Anmeldetag: 08.02.1991
(51) Int. Cl.: D21G 1/00, F16C 13/00

(54) **Antriebsanordnung für eine Walze**
Device for driving a roll
Moyen d'entraînement pour un cylindre

(30) Priorität: 28.04.1990 DE 4013772
(43) Veröffentlichungstag der Anmeldung: 06.11.1991
(73) Patentinhaber: Eduard Küsters Maschinenfabrik GmbH & Co. KG, 47805 Krefeld (DE)
(72) Erfinder: Küsters, Karl-Heinz, W-4150 Krefeld (DE)
(74) Vertreter: Palgen, Peter, Dr. Dipl.-Phys.

(56) Entgegenhaltungen:
- EP-A- 0 043 119
- DE-A- 3 804 225
- US-A- 3 766 620

## Beschreibung

Die Erfindung bezieht sich auf eine Antriebsanordnung für eine Walze, die aus einer umlaufenden Hohlwalze, einem diese durchgreifenden Querhaupt und einer an dem Querhaupt abgestützten, gegen den Innenumfang der Hohlwalze wirkenden hydraulischen Stützeinrichtung besteht, die die auf eine Durchbiegung der Hohlwalze wirkenden Kräfte auf das Querhaupt überträgt, welches sich innerhalb der Hohlwalze durchbiegen kann und auf diese Weise die Gegenkräfte aufbringt.

Die hydraulische Stützeinrichtung kann aus einzelnen auf der Seite des Walzspalts an dem Querhaupt angebrachten kolbenartigen Stützelementen oder einer durchgehenden, auf ihrer ganzen Länge unter der Wirkung eines Flüssigkeitsdrucks stehenden Stützleiste bestehen. Bei der sogenannten schwimmenden Walze ist der Zwischenraum zwischen Querhaupt und Innenumfang der Hohlwalze durch Längsdichtungen und Endquerdichtungen in halbzylinderschalenförmige Längskammern unterteilt, von denen eine auf der Seite des Walzspalts gelegene Längskammer mit Druckflüssigkeit gefüllt werden kann, die einen gleichmäßigen Druck auf den Innenumfang der Hohlwalze ausübt.

Bei den in Rede stehenden Walzen gibt es außer den Unterschieden hinsichtlich der Stützeinrichtung auch noch Unterschiede hinsichtlich der Führung der Hohlwalze an den Enden auf dem Querhaupt. Bei einer ersten Ausführungform solcher Walzen ist die Hohlwalze an den Enden auf dem Querhaupt über Wälzlager gelagert. Bei einer zweiten Ausführungsform, nämlich bei den sogenannten Walzen mit innerem Hub oder selbstanstellenden Walzen ist an den Enden jeweils ein das Querhaupt umgebender Führungsring vorgesehen, der an dem Querhaupt in der Wirkebene senkrecht zur Achse der Walze linear geführt ist und an dem die Hohlwalze wiederum über ein Wälzlager gelagert ist. Dieses Wälzlager hat aber nur reine Führungsaufgaben senkrecht zur Wirkebene und kann keine Kräfte in der Wirkebene übertragen, weil der Führungsring in der Wirkungsebene senkrecht zur Walzenachse frei beweglich ist. Durch entsprechende Betätigung der Stützeinrichtung kann die Hohlwalze gegenüber dem Querhaupt bei solchen Walzen um mehrere 1o mm verlagert werden. Auf diese Weise kann das Öffnen und Zustellen des Walzspalts durch die Stützeinrichtung bewirkt werden und kann das Querhaupt fest im Walzenständer gelagert sein, was eine große konstruktive Vereinfachung gegenüber anderen Ausführungsformen bedeutet, bei denen das Querhaupt an Schwingen oder in Schlittenführungen in der Wirkebene verlagert werden mußte , um den Walzspalt zu öffnen oder zu schließen.

Der recht große Hub in der Wirkebene, den die Hohlwalze bei den in Rede stehenden selbstanstellenden Walzen ausübt, bringt jedoch Probleme mit sich, wenn die Hohlwalze angetrieben sein soll. Es muß ja eine Antriebsverbindung von einem feststehenden äußeren Motor zu der sich verlagernden Hohlwalze geschaffen werden.

Eine Lösung dieses Problems besteht darin, daß das Gehäuse, in welchem das Antriebsritzel gelagert ist, seinerseits auf der Hohlwalze gelagert ist, so daß das Antriebsritzel und die Antriebsverzahnung an der Hohlwalze eine unveränderliche Lage gegeneinander einnehmen und eine einwandfreie Kraftübertragung gesichert ist. Das Antriebsritzel wird seinerseits über eine Kardanwelle an den äußeren Antriebsmotor angeschlossen.

Eine Ausführungsform dieser Art ist Gegenstand der DE-OS 25 o7 677. Die Lagerung des Antriebsgehäuses erfolgt hierbei auf der Außenseite eines mit der Hohlwalze verbundenen axialen Ansatzes derselben. Das Ende des Querhauptes greift durch den Ansatz und damit auch durch das Antriebsgehäuse hindurch und ist außerhalb derselben in einem Pendellager in einem Walzenständer oder dergleichen abgestützt. Innerhalb des Ansatzes ist auf dem Ende des Querhauptes ein Führungsring in der Wirkebene senkrecht zur Walzenachse linear verschiebbar geführt, der auf seine Außenseite an dem Innenumfang des Ansatzes gelagert ist.

Hier liegt eine problematische Stelle, denn durch die schnell umlaufende Hohlwalze bzw. deren Ansatz wird auch bei Vorhandensein einer Wälzlagerung auf den Führungsring ein drehzahlabhängiges Mitnahmemoment ausgeübt, welches zu Kräften auf die Geradführung des Führungsrings Anlaß ist, die das freie Spielen derselben beeinträchtigen und somit die Steuerung der Linienkraft erschweren.

Der Erfindung liegt die Aufgabe zugrunde, derartige Einflüsse auf die Linienkraft zu vermeiden.

Diese Aufgabe wird durch die in Anspruch 1 wiedergegebene Erfindung gelöst.

Die Lagerung des Getriebegehäuses erfolgt bei der Erfindung nicht mehr auf der Aussenseite des Ansatzes der Hohlwalze, sondern auf dessen Innenseite, wobei die Abstützung des Antriebsgehäuses an dem in den Ansatz der Hohlwalze eingreifendenaxialen Ansatz des Antriebsgehäuses über einen dazwischen angeordnetes Lager erfolgt. Die Auswirkung dieser Konstruktion besteht darin, daß dem Ende des Querhauptes nicht mehr der rasch umlaufende Ansatz der Hohlwalze, sondern nur der feststehende Ansatz des Getriebegehäuses gegenübersteht, der eine nichtdrehende Angriffsstelle für den Führungsring bilden kann. Dieser erfährt also kein Mitnahmemoment mehr.

Die Konstruktion mit dem eingreifenden axialen Ansatz des Antriebsgehäuses ist für sich genommen aus der US-PS 37 66 62O bekannt. Hierbei handelt es sich aber um eine Walze anderer Art, nämlich um eine solche, bei der die Hohlwalze an ihren Enden auf dem Querhaupt gelagert ist. Es finden also kein innerer Hub und keine Selbstanstellung statt, und es gibt dementsprechend auch keinen Führungsring, dessen Gängigkeit durch ein Mitnahmemoment beeinträchtigt werden könnte.

Die Walze nach der DE-OS 35 32 843 weist ebenfalls ein Antriebsgehäuse mit einem axialen Ansatz auf, auf welchem außen ein verzahnter Antriebsring gelagert ist, der mit der Hohlwalze drehverbunden ist. Es sind auch ein innerer Hub und ein Führungsring vorhanden, doch ist letzterer gegenüber der Lagerung auf dem Ansatz des Antriebsgehäuses axial nach innen in die Hohlwalze hinein versetzt. Am Querhaupt ist eine Drehmomentstütze vorgesehen, an der sich der Führungsring gegen das Mitnahmemoment abstützt. Die Beeinträchtigung der Gängigkeit der Geradführung an dem Führungsring ist auch hier gegeben.

Bei der Erfindung sind die Lagerung der Hohlwalze an dem Führungsring und die Lagerung des Antriebsgehäuses an der Hohlwalze gewissermaßen an dem Ansatz des Antriebsgehäuses integriert. Dadurch, daß dem Führungsring auf einer Seite nur der nichtdrehende Ansatz des Getriebegehäuses gegenübersteht, kann hier eine Drehlageranordnung eingespart werden, was angesichts der Größe solcher Lager ein bedeutender Kostenfaktor ist.

Der Führungsring ist gemäß Anspruch 2 zweckmäßig über eine Pendellagerung mit dem axialen Ansatz des Antriebsgehäuses drehverbunden.

Auf diese Weise kann die Verbindung zu dem axialen Ansatz des Antriebsgehäuses hergestellt und gleichzeitig eine Möglichkeit für den Ausgleich der Durchbiegung des Querhaupts gegenüber der Hohlwalze geschaffen werden.

Da der Führungsring bei solchen Durchbiegungen ein Kippmoment auf dem axialen Ansatz des Antriebsgehäuses ausübt, empfehlen sich gemäß Anspruch 3 zwei Abstand voneinander aufweisende Wälzlager zur Lagerung des Ansatzes innerhalb des axialen Ansatzes der Hohlwalze.

Die Anordnung nach Anspruch 4 dient der optimalen Kraftübertragung, während die Anordnung nach Anspruch 5 eine optimale Platznutzung in Achsrichtung gewährleistet.

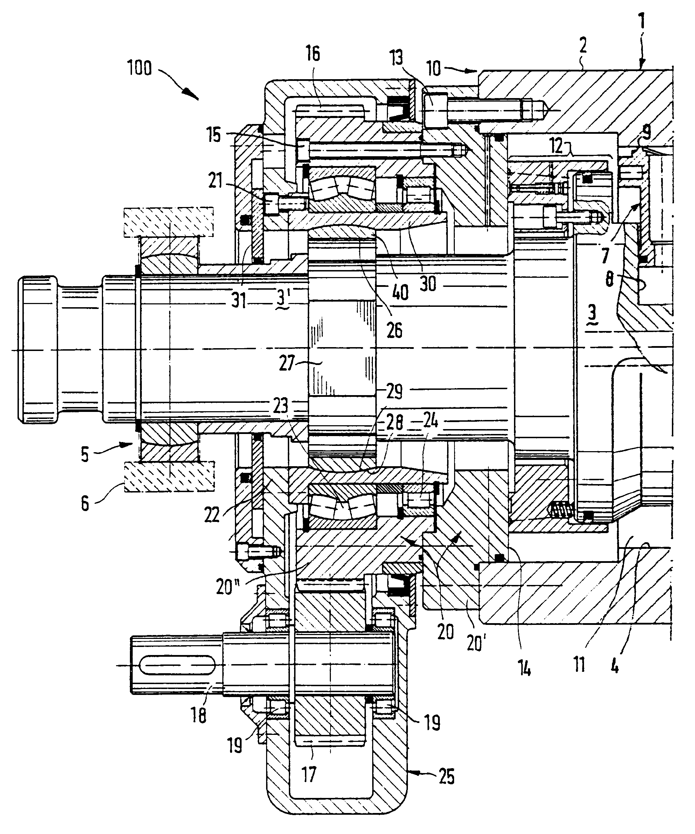

In der Zeichnung sit ein Ausführungsbeispiel der Erfindung dargestellt.

Sie zeigt einen Längsschnitt durch das Antriebsende einer erfindungsgemäßen Walze.

Die in der Zeichnung als Ganzes mit 1oo bezeichnete Walze umfaßt eine umlaufende Hohlwalze 1, die den arbeitenden Walzenumfang 2 bildet und einen zylindrischen Innenumfang 4 aufweist. Die Hohlwalze 1 ist der Länge nach von einem undrehbaren Querhaupt 3 durchgriffen, welches mit seinem Ende 3′ aus der Hohlwalze vorsteht und über ein Pendellager 5 in einem Walzenständer 6 gelagert ist. Das Querhaupt 3 beläßt ringsum Abstand vom Innenumfang 4 der Hohlwalze 1 und kann sich somit innerhalb der Hohlwalze 1 durchbiegen, ohne mit dem Innenumfang 4 in Berührung zu kommen. An der dem in der Zeichnung oben gelegenen Walzspalt 1o zugewandten Oberseite des Querhaupts 3 ist eine hydraulische Stützeinrichtung vorgesehen, die in dem Ausführungsbeispiel aus längs des Querhauptes 3 aufgereihten kolbenartigen Stützelementen 7 besteht, die in radiale Zylinderkammern 8 des Querhauptes 3 eingreifen und mit ihrer Anlagefläche 9 gegen den Innenumfang 4 der Hohlwalze 1 anliegen. Die Stützelemente 7 erlauben die Ausübung einer hydraulischen Kraft gegen den Innenumfang 4 und stützen die Hohlwalze 1 in umgekehrter Betrachtungsweise gegen die Linienkraft im Walzspalt 1o von innen an dem sich unter der Wirkung dieser Kräfte durchbiegenden Querhaupt 3 ab.

Der Zwischenraum 11 zwischen dem Querhaupt 3 und dem Innenumfang 4 der Hohlwalze 1 ist gegen das sich ansammelnde, an den Stützelementen 7 austretende Druck-öl durch eine als Ganzes mit 12 bezeichnete Gleitringdichtungsanordnung in Achsrichtung abgedichtet.

Am Ende der Hohlwalze 1 ist ein axialer Ansatz 2o derselben vorgesehen, der in dem Ausführungsbeispiel aus zwei Ringen 2o′ und 2o˝ zusammengesetzt ist. Der Ring 2o′ ist mittels Schrauben 13 unmittelbar an der Stirnseite der Hohlwalze 1 befestigt und wirkt mit seiner im Innern der Hohlwalze 1 zugewandten Stirnseite 14 mit der Gleitringdichtung 12 zusammen. Der Ring 2o˝ sitzt außen an dem Ring 2o′ und ist mit diesem über Schrauben 15 verbunden. Er trägt an seiner Außenseite eine Außenverzahnung 16, mit der ein Antriebsritzel 17 zusammenwirkt, dessen Ritzelwelle 18 zur Achse der Hohlwalze 1 parallel ist.

Das Ritzel 17 ist in Wälzlagern 19 in einem das Vorstehende Ende 3′ des Querhauptes 3 umgebenden Antriebsgehäuse 25 gelagert, welches einen inneren axialen Ansatz 3o in Gestalt einer Büchse aufweist, der mittels Schrauben 21 an der zur Achse senkrechten, der Hohlwalze 1 abgelegenen Wandung 22 des Antriebsgehäuses 25 befestigt ist. Der Ansatz 3o erstreckt sich von der Wandung 22 gegen die Hohlwalze 1 hin und beläßt innen Abstand gegen den Außenumfang des vorstehenden Endes 3′ des Querhauptes 3 und außen Abstand zum Innenumfang des axialen Ansatzes 2o der Hohlwalze 1. In dem letzteren Abstandsraum sind nebeneinander mit axialen Abstand ein Pendelrollenlager 23 und ein Radialrollenlager 24 angeordnet, über welche das Antriebsgehäuse 25 innen an dem Ansatz 2o drehbar gelagert ist.

Das Antriebsgehäuse 25 weist eine nicht dargestellte, an einem äußeren Festpunkt angreifende Drehmomentstütze auf, die das durch den Angriff des Ritzels 17 an der Außenverzahnung 16 der Hohlwalze 1 auf das Antriebsgehäuse 25 ausgeübte Drehmoment abfängt.

In dem innerhalb des Pendelrollenlagers 23 gelegenen Bereich ist ein Führungsring 4o vorgesehen, dessen innere Öffnung bezüglich der Ringachse nicht kreisrund ist, sondern einander gegenüberliegende parallele Flächen aufweist, die im Sinne einer Querschnittssehne in das Innere der ansonsten kreiszylindrischen Innenumfangsfläche 26 des Führungsrings 4o vorspringen und aneinander parallel gegenüberliegenden Abflachungen 27 des Endes 3′ des Querhaupts 3 anliegen. Der Führungsring 4o ist dadurch in der gemäß der Zeichnung von oben nach unten verlaufenden Richtung, d.h. parallel zur durch die Kraftrichtung der Stützelemente 7 bestimmten Wirkebene der Walze 1oo und senkrecht zu deren Achse gerade geführt.

An seiner Außenseite weist der Führungsring 4o eine Kugelfläche 28 auf und ist damit in einer entsprechenden Kugelfläche 29 an der Innenseite des Ansatzes 3o ababgestützt.

Der Ansatz 3o und der Führungsring 4o verdrehen sich nicht gegeneinander, weil der Ansatz 3o mit dem Antriebsgehäuse 25 über die Drehmomentstütze drehfest gehalten und auch das Querhaupt 3 undrehbar sind. Die Realtivdrehung liegt erst auf der Außenseite des Ansatzes 3o vor, wo die Lager 23,24 die Abstützung an dem umlaufenden Ansatz 2o der Hohlwalze 1 erbringen. Von dem durch den rasch umlaufenden Ansatz 2o über die Lager 23,24 auf den Ansatz 3o ausgeübten Mitnahmemoment bleibt der Führungsring 4o frei, weil dieses Mitnahmemoment durch die Drehmomentstütze des Antriebsgehäuses 25 abgefangen wird. Die Geradführung des Führungsrings 4o erfährt also keine hohen Seitenkräfte und wird auch nicht auf diese Weise schwergängig.

Die Hohlwalze 1 mit dem daran gelagerten Antriebsgehäuse kann sich als Ganzes in der Wirkebene gegenüber dem Querhaupt 3 um eine Strecke verlagern, die durch den Hub der Stützelemente 7 bzw. den innerhalb des Innenumfangs 4 zur Verfügung stehenden Platz bestimmt ist. In der Praxis handelt es sich um eine Strecke von einigen 1o mm, die zur Durchführung von Anstell- oder Lüftbewegungen ausreicht. Der Führungsring folgt dieser Bewegung unter Abgleiten an den Abflachungen 27. Um bei so großen Verlagerungen die Abdichtung des Antriebsgehäuses 25 nach außen zu gewährleisten, ist eine das Ende 3′ des Querhauptes umgebende,zur Achse senkrechte Dichtscheibe 31 vorgesehen die an der Außenseite der Wandung 22 des Antriebsgehäuses 25 verlagerbar, jedoch abgedichtet geführt ist.

## Patentansprüche

1. Antriebsanordnung für eine Walze (1oo), die aus einer umlaufenden, den arbeitenden Walzenumfang (2) bildenden Hohlwalze (1) und einem die Hohlwalze (1) der Länge nach mit allseitigem Abstand durchgreifenden, undrehbaren, an den Enden (3′) aus den Enden der Hohlwalze (1) hervorstehenden und dort abgestützten Querhaupt (3) sowie einer an dem Querhaupt (3) im Innern der Hohlwalze (1) abgestützten, gegen den Innenumfang (4) der Hohlwalze (1) wirkenden hydraulischen Stützeinrichtung (7,7,...) besteht,
mit einem eine Außenverzahnung (16) aufweisenden axialen Ansatz (2o) der Hohlwalze (1),
mit einem in die Außenverzahnung (16) eingreifenden Antriebsritzel (17) mit zur Achse der Hohlwalze (1) paralleler Achse,
mit einem auf dem Ende (3′) des Querhaupts (3) angeordneten mittels einer Drehmomentstütze abgestützten Antriebsgehäuse (25), in welchem das Antriebsritzel (17) gelagert ist, und mit einem ein vorstehendes Ende (3′) des Querhaupts (3) umgebenden, an dem Querhaupt (3) in der Wirkebene der Walze (100) senkrecht zur Achse der Hohlwalze (1) geradlinig geführten Führungsring (40),
gekennzeichnet durch
einen gegen die Hohlwalze (1) gerichteten, das vorstehende Ende (3′) des Querhaupts (3) mit radialem Abstand umgebenden axialen Ansatz (3o) des Antriebsgehäuses (25), der mit Abstand radial innerhalb des axialen Ansatzes (2o) der Hohlwalze (1) verläuft,
und eine in dem Abstandsraum zwischen den axialen Ansätzen (2o,3o) der Hohlwalze (1) und des Antriebsgehäuses (25) vorgesehenen Lageranordnung (23,24), mittels deren das Antriebsgehäuse (25) an dem axialen Ansatz (2o) der Hohlwalze (1) gelagert ist,
wobei der Führungsring (4o) radial von innen an dem axialen Ansatz (3o) des Antriebsgehäuses (25) anliegt.

2. Antriebsanordnung nach Anspruch 1, dadurch gekennzeichnet, daß der Führungsring über eine Pendellagerung (28,29) an dem axialen Ansatz (3o) des Antriebsgehäuses (25) anliegt.

3. Antriebsanordnung nach Anspruch 1 oder 2, dadurch gekennzeichnet, daß die Lageranordnung (23,24) mindestens zwei in Achsrichtung Abstand voneinander aufweisende Wälzlager umfaßt.

4. Antriebsanordnung nach Anspruch 3, dadurch gekennzeichnet, daß die Lageranordnung (23,24) ein Pendelrollenlager (23) umfaßt und der Führungsring (4o) axial in gleicher Höhe wie das Pendelrollenlager (23) angeordnet ist.

5. Antriebsanordnung nach einem der Ansprüche 1 bis 4, dadurch gekennzeichnet, daß der Ansatz (3o) des Antriebsgehäuses (25) von der der Hohlwalze (1) abgelegenen zur Achse senkrechten Wandung (22) des Antriebsgehäuses (25) gegen die Hohlwalze (1) vorspringt, der Ansatz (2o) der Hohlwalze (1) in das Antriebsgehäuse (25) eingreift und die zwischen den Ansätzen (2o,3o) befindliche Lageranordnung (23,24) im Innern des Antriebsgehäuses (25) vorgesehen ist.

## Claims

1. A drive system for a roller (100) consisting of a rotating shell (1) forming the working roller periphery (2), and a non-rotatable beam (3) which extends through the length of the shell (1) at a distance therefrom all round, said beam projecting from the ends of the shell (1) at the ends (3′), where it is supported, and a hydraulic support system (7, 7, ...) which is supported on the beam (3) inside the shell (1) and which acts against the inner periphery (4) of the shell (1),
having an axial extension (20) on the shell (1), said extension having an outer toothing (16),
having a drive pinion (17) which engages in the outer toothing (16) and the axis of which is parallel to the axis of the shell (1),
having a drive housing (25) disposed on the end (3′) of the beam (3) and supported by means of a torque stay, the drive pinion (17) being mounted in said housing,
and having a guide ring (40) which surrounds one projecting end (3′) of the beam (3) and is guided rectilinearly on the beam (3) in the operative plane of the roller (100) perpendicularly to the axis of the shell (1),
characterised by:
an axial extension (30) on the drive housing (25), said extension (30) being directed towards the shell (1) and surrounding the projecting end (3′) of the beam (3) with a radial gap, said extension extending with a gap radially inside the axial extension (20) of the shell (1), and a bearing system (23, 25) provided in the gap between the axial extensions (20, 30) of the shell (1) and the drive housing (25), by means of which bearing system the drive housing (25) is mounted on the axial extension (20) of the shell (1),
the guide ring (40) radially bearing from inside against the axial extension (30) of the drive housing (25).

2. A drive system according to claim 1, characterised in that the guide ring bears against the axial extension (30) of the drive housing (25) by way of a self-aligning bearing (28, 29).

3. A drive system according to claim 1 or 2, characterised in that the bearing system (23, 24) comprises at least two axially spaced rolling bearings.

4. A drive system according to claim 3, characterised in that the bearing system (23, 24) comprises a self-aligning roller bearing (23) and the guide ring (40) is disposed axially at the same height as the self-aligning roller bearing (23).

5. A drive system according to any one of claims 1 to 4, characterised in that the extension (30) on the drive housing (25) projects towards the shell (1) from that wall (22) of the drive housing (25) which is remote from the shell (1) and perpendicular to the axis, the extension (20) on the shell (1) engages in the drive housing (25), and the bearing system (23, 24) provided between the extensions (20, 30) is disposed inside the drive housing (25).

## Revendications

1. Système d'entraînement d'un cylindre (100) comportant les éléments suivants :
- un cylindre creux (1) dont la surface externe (2) constitue la surface de travail,
- une entretoise (3) traversant longitudinalement le cylindre creux, sans tourner et en laissant un certain intervalle entre elle et le cylindre creux d'où elle dépasse par ses extrémités (3′) montées dans des supports,
- un ensemble hydraulique, d'appui (7, 7, ...) monté sur l'entretoise (3) et soutenant le cylindre creux (1) le long de sa paroi interne (4),
- un embout axial (20) prolongeant l'arbre creux (1), équipé d'une denture externe (16) en prise avec un pignon d'entraînement (17) d'axe parallèle à celui du cylindre creux (1),
- un boîtier d'entraînement (25) portant le pignon (17), monté sur l'extrémité (3′) de l'entretoise (3) et prenant appui sur un support de couple,
- un anneau de guidage (40) entourant une extrémité dépassante (3′) de l'entretoise (3), guidé linéairement le long de l'entretoise (3) dans le plan d'action du cylindre (100), perpendiculairement à l'axe de celui-ci,
ce système présentant les caractéristiques suivantes :
- le boîtier d'entraînement (25) comporte, entourant à une certaine distance l'extrémité débordante (3′) de l'entretoise et du côté opposé au cylindre creux (1), une embase (30), axiale, située à une certaine distance radiale à l'intérieur de l'embout axial (20) du cylindre creux (1),
- dans l'espace compris entre les pièces (20) et (30) solidaires du cylindre (1) et du boîtier d'entraînement (25) est logé un jeu de paliers (23, 24) par lesquels le boîtier (25) est monté sur l'embout (20) du cylindre creux (1),
- l'anneau de guidage (40) est en appui sur l'intérieur de l'embase axiale (30) du boîtier d'entraînement(25).

2. Système d'entraînement selon la revendication 1, caractérisé en ce que l'anneau de guidage s'appuie sur l'embase axiale (30) du boîtier d'entraînement (25), par l'intermédiaire d'un palier oscillant (28, 29).

3. Système d'entraînement selon la revendication 1 ou 2, caractérisé en ce que le jeu de paliers (23, 24) comprend au moins deux paliers à rouleaux, espacés axialement.

4. Système d'entraînement selon la revendication 3, caractérisé en ce que le jeu de paliers (23, 24) comprend un palier oscillant (23) et l'anneau de guidage (40) est monté, axialement, au niveau de ce palier oscillant (23).

5. Système d'entraînement selon l'une des revendications 1 à 4, caractérisé en ce que l'embase (30) du boîtier d'entraînement (25) déborde, en direction du cylindre creux (1) la paroi verticale (22) du boîtier (25), opposée au cylindre (1), tandis que l'embout (20) de celui-ci pénètre dans le boîtier (25), le jeu de paliers (23, 24) étant logé à l'intérieur du boîtier (25), entre les pièces (20 et 30).
